# EUROPÄISCHE PATENTSCHRIFT

(11) **EP 1 487 624 B1**
(45) Veröffentlichungstag und Bekanntmachung des Hinweises auf die Patenterteilung: **07.03.2007**
(21) Anmeldenummer: 03744361.1
(22) Anmeldetag: 14.03.2003
(51) Int. Cl.: B29C 44/12, B29C 44/04

(54) **VERKLEIDUNGSTEIL, INSBESONDERE FÜR EIN KRAFTFAHRZEUG, UND VERFAHREN ZU SEINER HERSTELLUNG**
PANEL ELEMENT, PARTICULARLY FOR A MOTOR VEHICLE, AND METHOD FOR THE PRODUCTION THEREOF
ELEMENT D'HABILLAGE, CONCU EN PARTICULIER POUR UN VEHICULE AUTOMOBILE, ET SON PROCEDE DE PRODUCTION

(30) Priorität: 15.03.2002 DE 10211683
(43) Veröffentlichungstag der Anmeldung: 22.12.2004
(73) Patentinhaber: Johnson Controls Interiors GmbH & Co. KG, 42285 Wuppertal (DE)
(72) Erfinder: WOLFF, Martin, 45529 Hattingen (DE); BUDDE, Birgit, 42857 Remscheid (DE); JÜRSS, Detlef, Walter, 52074 Aachen (DE); BRÜCKNER, Hubert, 40699 Erkrath (DE); WELLEN, Heinz, Dieter, 47804 Krefeld (DE); WERNER, Johann-Georg, 59071 Hamm (DE)
(74) Vertreter: Hemmelmann, Klaus
(86) Internationale Anmeldenummer: PCT/EP2003/002671
(87) Internationale Veröffentlichungsnummer: WO 2003/078128

(56) Entgegenhaltungen:
- DE-A- 2 938 287
- DE-A- 19 814 956
- US-A- 5 976 289
- PATENT ABSTRACTS OF JAPAN vol. 006, no. 138 (M-145), 27. Juli 1982 (1982-07-27) & JP 57 059731 A (NISSAN MOTOR CO LTD;OTHERS: 01), 10. April 1982 (1982-04-10)

## Beschreibung

Die Erfindung betrifft ein Verfahren zur Herstellung eines Verkleidungsteils, insbesondere für den Innenraum eines Kraftfahrzeugs, bei dem der Zwischenraum zwischen einem flächigen Dekormaterial und einem Träger ausgeschäumt und das Dekormaterial beim Schäumen um den auszuschäumenden Bereich herum umlaufend dichtend auf die innenraumseitige Oberfläche des Trägers gepreßt wird, sowie ein Verkleidungsteil, insbesondere für den Innenraum eines Kraftfahrzeugs, mit einem Träger, einer flächigen Dekorschicht und einer dazwischen angeordneten Schaumlage.

### Stand der Technik

In der Patentanmeldung JP 57059731 wird ein Verfahren zur Herstellung von Paneelen beschrieben, bei welchem eine Dekorhaut in einem Schäumwerkzeug während des Schäumvorgangs dichtend gegen eine Rippe auf der innenraumseitigen Oberfläche eines Trägers gepreßt wird.

Aus der Patentschrift US 5,976,289 ist ein Verfahren zur Herstellung eines Verkleidungsteils für ein Kraftfahrzeug bekannt. Bei der Fertigung von Armaturentafeln werden ein Träger und eine Dekorhaut einander gegenüberliegend in die geöffneten Formhälften eines Schäumwerkzeugs eingelegt. Nach dessen Schließen expandiert eine schäumfähige Masse in der zwischen Dekorhaut und Träger gebildeten Kavität, wobei die Dekorhaut an der innenraumseitigen Oberfläche des Trägers anliegt.

Ein anderes Verfahren zur Herstellung von Verkleidungsteilen wird in der Offenlegungschrift DE 198 14 956 A1 offenbart. Das Verkleidungsteil besteht aus einem luftdurchlässigen, gegebenenfalls auch schaumdurchlässig porösen Träger, der mit einer Dekorfolie überzogen ist. Die Dekorfolie ist um den Rand des Trägers herumgezogen (Umbug), wobei der Zwischenraum zwischen Dekorfolie und Träger mit einem Polyurethanschaum ausgeschäumt ist. Bei der Herstellung dieses Bauteil wird zunächst die Dekorfolie mit Übermaß zugeschnitten und durch Tiefziehen einschließlich des Umbugs vorgeformt und auf Endmaß geschnitten. Nachfolgend wird der luftdurchlässige Träger in den Umbug der Dekorfolie eingesetzt und mit dieser in das geöffnete Schäumwerkzeug eingelegt. Durch das Zufahren des Schäumwerkzeugs erhält der Umbug seine endgültige Lage und wird nach dem Einbringen des Schaums durch diesen mit dem Träger verklebt. In bestimmten Bereichen des Verkleidungsteils, insbesondere an Orten, an denen später eine Befestigung erfolgt, kann die Folie noppenartig auf den Träger gepreßt und dort unmittelbar verklebt werden.

Dieses Vorgehen ist mit dem Nachteil verbunden, dass die teuere Dekorfolie den Träger vollständig überzieht und darüber hinaus auch noch den Umbug bildet, so dass ein erheblicher Materialeinsatz auch an im Einbauzustand nicht sichtbaren Bereichen erforderlich ist.

In der Druckschrift DE 200 21 270 U1 wird ferner ein Formwerkzeug zur Herstellung von Formteilen beschrieben, bei welchem eine Dekorschicht mittels einer aufblasbaren Dichtung während des Schäumvorgangs auf ein formstabiles Trägerteil gepreßt wird. Über die Dichtungsebene erfolgt auch das gezielte Entlüften beim Aufschäumen der Schaumstoffschicht.

DE 32 30 178 A1 beschreibt ein Herstellverfiahren für Formkörper aus geschäumtem Kunststoff, bei welchen eine Dekorschicht durch Aufbringen eines filmbindenden Lacks auf die Oberfläche des Schäumwerkzeugs erzeugt wird. Das Schäummaterial wird dabei nach der Lacktrocknung und der damit einhergehenden Filmbildung in das Werkzeug eingefüllt.

Aus der Offenlegungschrift DE 198 14 956 A1 ist ein Verfahren zur Herstellung von Kfz-Innenverkleidungen bekannt, bei dem ein insgesamt luftdurchlässiger Träger mit einer hinterschäumten Dekorfolie versehen wird.

In der Druckschrift DE 37 01 560 C1 wird ein Verfahren zur Fertigung von Innenverkleidungsteilen vorgeschlagen, die einen Träger aus einem glasfaserhaltigem Harz sowie sichtseitig unterschiedlich kaschierte Abschnitte aufweisen. Die Übergangsbereiche zwischen diesen Abschnitten sind dabei in eine als solche sichtbare Nut verlegt.

### Aufgabe

Der Erfindung liegt die Aufgabe zugrunde, die Kosten zur Herstellung eines Verkleidungsteils zu senken und die Prozeßsicherheit beim Fertigungsvorgang zu erhöhen.

### Lösung

Die Aufgabe wird gemäß dem Verfahren des Anspruchs 1 gelöst.

Das im Wesentlichen gas- und schaumundurchlässige Dekormaterial kann nach einer Ausführung der Erfindung vor dem Schäumen durch Verfestigung eines in die Schäumform eingesprühten Polymers erzeugt werden. Dabei erfolgt das Schäumen vorzugsweise vor der vollständigen Verfestigung des Polymers, so dass sich die Wanddicke des Dekormaterials und damit der Werkstoffeinsatz durch Verstreckung verringern. Alternativ kann das Dekormaterial auch gesondert in die Schäumform eingelegt wird.

Vorzugsweise erzeugt die der Abdichtung dienende Anpreßzone eine dauerhafte stoffschlüssige Verbindung zwischen Dekormaterial und Träger, die darüber hinaus auch mit Vorteil eine Reißkante ausbilden kann, entlang derer das außerhalb des geschäumten Bereichs befindliche Dekormaterial entfernt wird.

Die der Erfindung zugrunde liegenden Aufgabe wird femer durch ein gattungsgemäßes Verkleidungsteil gemäß Anspruch 7 gelöst.

Die vorzugsweise im Wesentlichen gasundurchlässige Dekorschicht kann beispielsweise aus einer polymeren Sprühhaut, insbesondere aus Polyurethan bestehen, die unmittelbar vor dem Schäumvorgang durch Einsprühen des Polymers in eine Hälfte der Schäumform erzeugt werden kann. Alternativ kann die Dekorschicht auch aus einem flächigen Halbzeug, insbesondere aus einer Kunststofffolie bestehen.

Als Trägerwerkstoff besonders geeignet ist ein Faser-Harz-Preßteil, insbesondere aus harzgebundenen Flachs- und/oder Sisalfasern, das durch seinen Anteil an nachwachsenden Rohstoffen auch in ökologischer Hinsicht Vorteile bietet.

### Figuren

Die Figuren stellen beispielhaft und schematisch eine Ausführung der Erfindung dar.

Es zeigen:
- Fig. 1: einen Schnitt durch ein erfindungsgemäßes Verkleidungsteil mit einer angedeuteten Formhälfte des Schäumwerkzeugs,
- Fig. 2: eine Aufsicht auf das Verkleidungsteil nach Fig. 1,
- Fig. 3: die Umformung eines Halbzeugs zum Träger des Verkleidungselements.

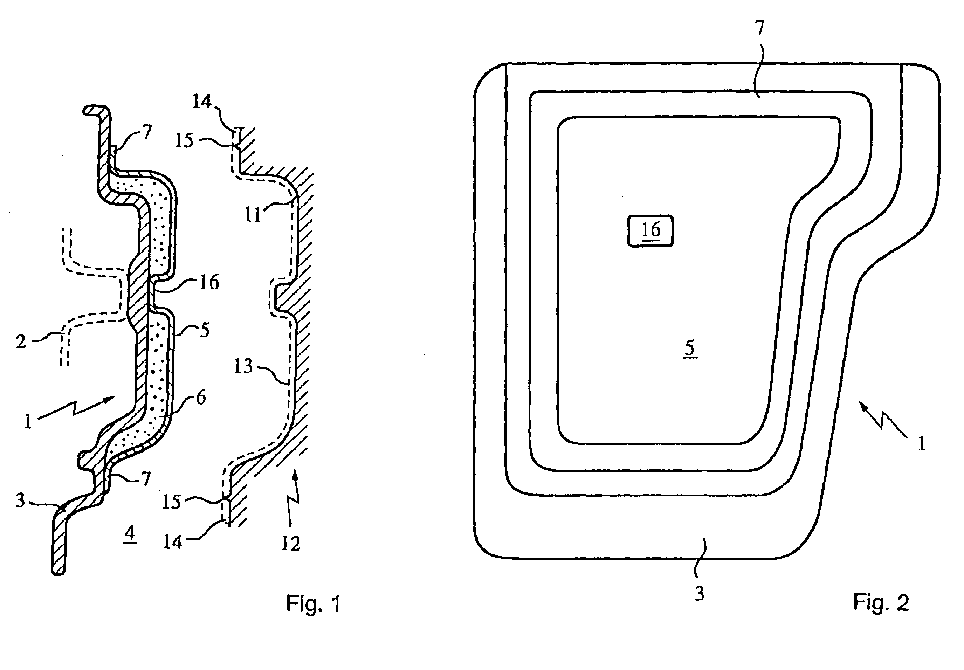

Das Verkleidungsteil 1 besteht, wie aus den Figuren 1 und 2 ersichtlich, aus einem mit der Metallstruktur 2 der Fahrzeugkarosserie verbindbaren Träger 3, der auf seiner dem Fahrzeuginnenraum 4 zugewandten Seite bereichsweise mit einem flächigen Dekormaterial 5 überzogen ist. Zur Erzeugung einer weichen Haptik ist der Raum zwischen Dekormaterial 5 und Träger 3 mit einer Schaumlage 6 ausgefüllt,

Das Dekormaterial 5 weist eine um die Schaumlage 6 vollumfänglich umlaufende Anpreßzone 7 auf, in der das Dekormaterial unmittelbar gasdicht mit dem Träger 3 verklebt ist. Zur Herstellung der Verklebung ist der Einsatz gesonderter Klebstoffe in der Regel entbehrlich, da ein in die Anpreßzone eindringender Film aus dem noch nicht ausreagierten Werkstoff der Schaumlage 6 den notwendigen Stoffschluß bewirkt.

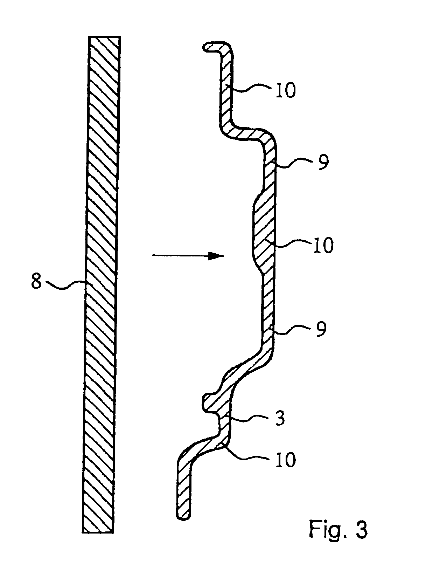

Bei der Herstellung des Verkleidungsteils 1 wird, wie in Fig. 3 dargestellt, zunächst ein plattenförmiges, gas- und gegebenenfalls auch schaumdurchlässiges Halbzeug 8 aus harzgebundenen Flachs- und Sisalfasem zu einem Träger 3 gepreßt, der eine relativ einfache, dreidimensionale Gestalt aufweisen kann. Beim Pressen des Halbzeugs 8 werden durch die Kontur des Preßwerkzeugs im Träger 3 hochverdichtete Zonen 9 (geringe Wanddicke) und weniger stark verdichtete Zonen 10 ausgebildet. In den hochverdichteten Zonen 9 ist der Werkstoff des Halbzeugs derart komprimiert, dass der Träger in diesen Bereichen sowohl schaum- als auch im Wesentlichen gasdicht ist. In den weniger stark verdichtete Zonen 10 besteht weiterhin eine Luftdurchlässigkeit. Der Werkstoff ist dort jedoch so verdichtet, dass ein Schaumdurchtritt in diesem Bereich beim nachfolgenden Schäumprozeß ausgeschlossen ist.

In die Kavität einer mit dem Bezugszeichen 11 angedeuteten Formhälfte eines zweiteiligen Schäumwerkzeugs 12 wird anschließend eine gasdichte Polyurethan-Sprühhaut 13 eingebracht, aus der später das Dekormaterial 5 gebildet wird. Der von der Sprühhaut 13 überzogene Bereich der Formhälfte ist etwas größer als die Fläche des späteren Dekormaterials 5, aber deutlich kleiner als die Abmessungen des Trägers 3. Anschließend werden der Schaumwerkstoff in die Kavität eingefüllt, der zuvor ausgeformte Träger 3 auf die noch nicht ausreagierte Sprühhaut 13 aufgelegt und mittels einer weiteren, komplementären Formhälfte (nicht dargestellt) auf die Sprühhaut 13 aufgepreßt. Dabei bildet sich die um die Schaumlage 6 umlaufende Anpreßzone 7 aus, die den Bereich zwischen Träger 3 und Dekormaterial 5 nach außen gasdicht abschließt. Die aus dem Zwischenraum zwischen Träger 3 und Dekormaterial 5 unter der Wirkung des sich ausdehnenden Schaums verdrängte Luft kann über die weniger stark verdichteten Zonen 10 entweichen. Durch eine gezielte Anordnung der weniger stark verdichtete Zonen 10 kann daher die Ausbreitung des Schaums beeinflußt werden.

Zur Anbindung an die Metallstruktur der Karosserie kann das Verkleidungsteil 1 femer eine sogenannte Tuschierposition 16 aufweisen, in der das Dekormaterial im Bereich der Schaumlage 6 örtlich unmittelbar auf die Oberfläche des Trägers gepreßt wird, um beispielsweise eine Anlagefläche für eine Verschraubung auszubilden. Die Formhälfte 11 ist hierzu mit einem entsprechenden Vorsprung 17 versehen.

Letztlich kann das Verkleidungsteil 1 nach Öffnen der Formhälften aus dem Schäumwerkzeug 12 entnommen werden. Der geringfüge Überstand 14 an Dekormaterial kann auf einfache Weise werkzeuglos entfernt werden, da eine in die Formhälfte 11 eingearbeitete umlaufende Schneide 15 eine die Anpreßzone 7 umgebende Sollbruchstelle im Dekormaterial 5 ausbildet.

### Bezugszeichen

- 1: Verkleidungsteil
- 2: Metallstruktur
- 3: Träger
- 4: Fahrzeuginnenraum
- 5: Dekormaterial
- 6: Schaumlage
- 7: Anpreßzone
- 8: Halbzeug
- 9: hochverdichtete Zone
- 10: weniger stark verdichtete Zone
- 11: Formhälfte
- 12: Schäumwerkzeug
- 13: Sprühhaut
- 14: Überstand
- 15: Schneide
- 16: Tuschierposition
- 17: Vorsprung

## Patentansprüche

1. Verfahren zur Herstellung eines Verkleidungsteils (1), insbesondere für den Innenraum eines Kraftfahrzeugs, bei dem der Zwischenraum zwischen einem flächigen Dekormaterial (5) und einem Träger (3) ausgeschäumt und das Dekormaterial (5) beim Schäumen um den auszuschäumenden Bereich herum umlaufend dichtend auf die innenraumseitige Oberfläche des Trägers (3) gepreßt wird, **dadurch gekennzeichnet, dass** die Abführung der beim Schäumen zu verdrängenden Luft durch die zwar schaumdichte, jedoch zumindest bereichsweise nicht gasdichte Struktur des Trägers (3) erfolgt, wobei der Träger (3) durch lokales Verdichten eines an sich gasdurchlässigen Rohteils vor dem Einlegen in das Schäumwerkzeug bereichsweise gasgedichtet wird.

2. Verfahren nach Anspruch 1, **dadurch gekennzeichnet, dass** das Dekormaterial (5) vor dem Schäumen durch Verfestigung eines in die Schäumform eingesprühten flüssigen Polymers erzeugt wird.

3. Verfahren nach Anspruch 2, **dadurch gekennzeichnet, dass** das Schäumen vor der vollständigen Verfestigung des Polymers erfolgt.

4. Verfahren nach Anspruch 1, **dadurch gekennzeichnet, dass** das Dekormaterial (5) gesondert in die Schäumform eingelegt wird.

5. Verfahren nach einem der vorhergehenden Ansprüche, **dadurch gekennzeichnet, dass** die der Abdichtung dienende Anpreßzone (7) eine dauerhafte stoffschlüssige Verbindung zwischen Dekormaterial (5) und Träger (3) erzeugt.

6. Verfahren nach Anspruch 5, **dadurch gekennzeichnet, dass** die der Abdichtung dienende Anpreßzone (7) eine Reißkante ausbildet, entlang derer das außerhalb des geschäumten Bereichs befindliche Dekormaterial (5) entfernt wird.

7. Verkleidungsteil (1), insbesondere für den Innenraum eines Kraftfahrzeugs, mit einem Träger (3), einer flächigen Dekorschicht (5) und einer dazwischen angeordneten Schaumlage (6), **dadurch gekennzeichnet, dass** das Verkleidungsteil (1) eine um die Schaumlage (6) umlaufende gasdichte Anpreßzone (7) aufweist, wobei der Träger (3) zumindest bereichsweise gasdurchlässig, aber schaumundurchlässig ist und weniger stark verdichtete, gasdurchlässige Zonen (10) und hochverdichtete, gasundurchlässige Zonen (9) aufweist.

8. Verkleidungsteil nach Anspruch 7, **dadurch gekennzeichnet, dass** die Dekorschicht (5) aus einer polymeren Sprühhaut (13), insbesondere aus Polyurethan besteht.

9. Verkleidungsteil nach Anspruch 7, **dadurch gekennzeichnet, dass** die Dekorschicht (5) aus einem flächigen Halbzeug, insbesondere aus einer Kunststofffolie besteht,

10. Verkleidungsteil nach Anspruch 8 oder 9, **dadurch gekennzeichnet, dass** das Dekormaterial (5) im Wesentlichen gasundurchlässig ist.

11. Verkleidungsteil nach Anspruch 14, **dadurch gekennzeichnet, dass** der Träger (3) aus einem Faser-Harz-Preßteil, insbesondere aus harzgebundenen Flachs- und/oder Sisalfasern besteht.

## Claims

1. Method for producing a trim article (1), in particular for the interior of a motor vehicle, in which the interspace between a sheet-like decorative material (5) and a carrier (3) is foam-filled, and, during foaming, the decorative material (5) is pressed sealingingly onto the interior-side surface of the carrier (3) so as to run around the region to be foam-filled, **characterized in that** the discharge of the air to be displaced during foaming takes place through the foam-tight, but, at least in regions, not gas-tight structure of the carrier (3), the carrier (3) being gas-sealed in regions by the local compression of an intrinsically gas-impermeable unprocessed part before introduction into the foaming die.

2. Method according to Claim 1, **characterized in that** the decorative material (5) is produced, before foaming, by the solidification of a liquid polymer sprayed into the foaming mould.

3. Method according to Claim 2, **characterized in that** foaming takes place before the complete solidification of the polymer.

4. Method according to Claim 1, **characterized in that** the decorative material (5) is introduced separately into the foaming mould.

5. Method according to one of the preceding claims, **characterized in that** the pressing zone (7) serving for sealing off makes a permanent materially integral connection between the decorative material (5) and the carrier (3).

6. Method according to Claim 5, **characterized in that** the pressing zone (7) serving for sealing off forms a tearing edge along which the decorative material (5) located outside the foamed region is removed.

7. Trim article (1), in particular for the interior of a motor vehicle, with a carrier (3), with a sheet-like decorative layer (5) and with a foam layer (6), arranged between them, **characterized in that** the trim article (1) has a gas-tight pressing zone (7) which runs around the foam layer (6), the carrier (3) being, at least in regions, gas-permeable but foam-impermeable and having gas-permeable zones (10) compressed to a lesser extent and highly compressed gas-impermeable zones (9).

8. Trim article according to Claim 7, **characterized in that** the decorative layer (5) consists of a polymeric spray-on skin (13) consisting particularly of polyurethane.

9. Trim article according to Claim 7, **characterized in that** the decorative layer (5) consists of a sheet-like semifinished product consisting particularly of a plastic film.

10. Trim article according to Claim 8 or 9, **characterized in that** the decorative layer (5) is essentially gas-impermeable.

11. Trim article according to Claim 14, **characterized in that** the carrier (3) consists of a fibre/resin pressed article, in particular of resin-bound flax fibres and/or sisal fibres.

## Revendications

1. Procédé de fabrication d'un élément d'habillage (1), en particulier pour l'habitacle d'un véhicule automobile, dans lequel l'espace intermédiaire entre un matériau plat de décoration (5) et un support (3) est rempli de mousse, tandis que lors du moussage, le matériau de décoration (5) est repoussé de manière étanche autour de la zone à mousser contre la surface du support (3) située du côté de l'habitacle, **caractérisé en ce que** l'évacuation de l'air refoulé lors du moussage s'effectue par la structure du support (3) qui, malgré qu'elle est étanche à la mousse, présente cependant au moins des parties non étanches au gaz, des parties du support (3) étant rendues étanches au gaz par compactage d'une pièce brute intrinsèquement perméable au gaz avant que le support soit placé dans l'outil de moussage.

2. Procédé selon la revendication 1, **caractérisé en ce que** le matériau de décoration (5) est créé avant le moussage par solidification d'un polymère liquide injecté dans le moule de moussage.

3. Procédé selon la revendication 2, **caractérisé en ce que** le moussage s'effectue avant la solidification finale du polymère.

4. Procédé selon la revendication 1, **caractérisé en ce que** le matériau de décoration (5) est placé séparément dans le moule de moussage.

5. Procédé selon l'une des revendications précédentes, **caractérisé en ce que** la zone de pressage (7) qui sert à assurer l'étanchéité crée une liaison permanente en correspondance de matière entre le matériau de décoration (5) et le support (3).

6. Procédé selon la revendication 5, **caractérisé en ce que** la zone de pressage (7) qui sert à assurer l'étanchéité forme un bord de déchirure le long duquel le matériau de décoration (5) situé à l'extérieur de la zone moussée est évacué.

7. Elément d'habillage (1), en particulier pour l'habitacle d'un véhicule automobile, qui présente un support (3), une couche de décoration (5) plane et une couche de mousse (6) disposée entre les précédentes, **caractérisé en ce que** l'élément d'habillage (1) présente une zone de pressage (7) étanche au gaz et qui entoure la couche de mousse (6), au moins certaines parties du support (3) étant perméables au gaz mais imperméables à la mousse et présentant des zones (10) moins fortement compactées et perméables au gaz ainsi que des zones (9) fortement compactées et imperméables au gaz.

8. Elément d'habillage selon la revendication 7, **caractérisé en ce que** la couche de décoration (5) est constituée d'une peau polymère pulvérisée (13) en particulier en polyuréthane.

9. Pièce d'habillage selon la revendication 7, **caractérisée en ce que** la couche de décoration (5) est constituée d'un produit semi-fini plat et en particulier d'une feuille en matière synthétique.

10. Pièce d'habillage selon les revendications 8 ou 9, **caractérisée en ce que** le matériau de décoration (5) est essentiellement imperméable au gaz.

11. Elément d'habillage selon la revendication 14, **caractérisé en ce que** le support (3) est constitué d'un élément comprimé en résine et fibres et en particulier de fibres de lin et/ou de sisal liées par une résine.
